# EUROPEAN PATENT APPLICATION

(11) **EP 4 414 627 A1**
(43) Date of publication of application: **14.08.2024**
(21) Application number: 24154946.8
(22) Date of filing: 31.01.2024
(51) Int. Cl.: F24S 25/634, H02S 20/00

(54) **PANEL CLAMP FOR FASTENING A SOLAR PANEL TO A MOUNTING RAIL**

(30) Priority: 01.02.2023 NL 2034065
(71) Applicant: Van Der Valk Systemen B.V., 2681 LP Monster (NL)
(72) Inventor: Prins, Vincent, Monster (NL)
(74) Representative: Nederlandsch Octrooibureau

(57) **Abstract**

There is provided a panel clamp (20) for fastening a solar panel to a mounting rail in a solar panel installation. The panel clamp comprises a solar panel engaging element (22), a rail engaging element (24), and a fastening tool (26). The fastening tool is operably engaged to both the solar panel engaging element (22) and the rail engaging element (24) and arranged to provide generate a relative movement between the elements to clamp the solar panel. The fastening tool uses a lever mechanism to generate the relative movement.

## Description

### Field of the invention

The present invention relates to a panel clamp, in particular a panel clamp for fastening a solar panel to a mounting rail. The invention further relates to a method for fastening solar panels to a mounting rail using such a panel clamp, and a fastening assembly and solar panel installation comprising such a panel clamp.

### Background art

Solar panels and solar collectors are frequently installed on roofs of buildings or other flat surfaces. The solar panels are typically secured by means of a fastening assembly that is connected or supported by the roof or other surface. Such a fastening assembly may comprise several different components, among which a mounting rail that is arranged above the surface or roof and configured to have the solar panels fixed thereto. The solar panel and/or solar collectors can be clamped onto the mounting rail and possibly adjusted in position and/or angle to obtain a maximum yield of solar energy. An example of a fastening assembly for a solar panel installation is for instance provided in patent document DE10132557A1.

For the engagement of the solar panel or solar collector to the mounting rail, panel clamps are used. The known panel clamps have various drawbacks. Firstly, typically two different types of clamps are required in the fastening assembly; so-called intermediate clamps and end clamps. An intermediate clamp is designed to be placed in between two adjacent solar panels and is used to clamp both solar panels to the mounting rail simultaneously. An end clamp, on the other hand, is designed to be arranged at the end of a row of solar panels and is configured to only clamp a single solar panel. Disadvantageously, intermediate clamps usually cannot be used as an end clamp, and vice versa. In particular, an intermediate clamp is structurally not suitable to fasten only a single solar panel in a durable and reliable manner. Consequently, two types of panel clamps are needed, which makes the logistics, installation, and manufacture of the panel clamps more expensive.

In addition, most existing panel clamps require additional tools or equipment to fasten the panel clamps when assembling the solar panel installation. This makes the installation relatively cumbersome as the correct tools and/or other equipment should be brought onto the roof for the installation.

Moreover, the connections between the panel clamps and the mounting rail are sometimes invasive, meaning that a hole needs to be drilled into the mounting rail, or the mounting rail needs to be provided with engagement means for connecting the panel clamps. For an invasive connection, once connected, the panel clamps cannot be disconnected from the mounting rail without leaving a damaged mounting rail. On the contrary, when engagement means are provided, they are usually provided at predetermined locations that cannot be freely chosen by the user. Consequently, the flexibility to adjust the position of the solar panels is reduced.

It would be desirable to provide a panel clamp which at least partially addresses some of the problems found in the prior art.

### Summary of the invention

Therefore, according to a first aspect of the present invention there is provided a panel clamp for fastening a solar panel to a mounting rail, wherein the panel clamp comprises a solar panel engaging element, a rail engaging element, and a fastening tool. The solar panel engaging element comprises a body with a central portion configured to extend substantially parallel to the mounting rail, and a flange extending from the body in a direction substantially parallel to the mounting rail, the flange being configured to be spaced from the mounting rail and to clamp a solar panel thereto. The rail engaging element comprises a body with a connector portion, and one or more fastening features to fasten the rail engaging element to the mounting rail. The fastening tool is operably engaged to the central portion of the solar panel engaging element and to the connector portion of the rail engaging element, wherein the fastening tool configured to generate a relative movement between the solar panel engaging element and the rail engaging element, thereby fastening the solar panel engaging element to the rail engaging element and clamping the solar panel to the mounting rail; wherein the fastening tool uses a lever mechanism to generate the relative movement.

In this context, the mounting rail is understood to be an elongate element that extends along a direction defined as the longitudinal direction. The solar panels are arranged on a top surface of the mounting rails and are arranged to extend in a plane defined by the longitudinal direction and a transverse direction perpendicular to the longitudinal direction. An upward direction is defined as a direction substantially perpendicular to the plane, i.e., the direction substantially perpendicular to the top surface of the mounting rail.

The lever mechanism is configured to generate a relative movement between the solar panel engaging element and the rail engaging element in a direction towards the mounting rail. As such, the relative movement typically extends in a direction substantially perpendicular to a top surface of the mounting rail. Since the rail engaging element is fastened to the mounting rail, the lever mechanism forces the movement of the solar panel engaging element, thereby pressing the flange of the solar panel engaging element onto the top surface of the solar panel and clamping it the mounting rail.

Advantageously, the fastening tool uses a lever mechanism to fasten the clamp. Due to the application of a lever mechanism, the panel clamp can be tightly fastened by hand, without using any additional tools. This eases the installation in comparison to conventional methods that for instance require the fastening of bolts or screws, and moreover reduces the amount of equipment that needs to be carried onto the roof for installation.

Several different types of lever mechanism may be applied. In an embodiment, the lever mechanism results from the incorporation of a quick release fastener in the panel clamp. Such fasteners are typically applied to allow the easy and fast assembly of wheels in racing bikes, yet may also be used in the panel clamp.

In an embodiment, the lever mechanism comprises a handle having a free end and a second end opposite to the free end, wherein the second end is pivotably engaged to the connector portion of the rail engaging element. Advantageously, the free end can easily be accessed to apply a force and fasten the panel clamp.

In an embodiment, the handle is supported by the central portion of the panel engaging element at a single fulcrum. The single fulcrum forms a pivot point when activating the lever mechanism. Upon application of a force adjacent to the free end, the handle starts pivoting around the fulcrum. Consequent to the pivoting and the engagement of the second end with the rail engagement element, I solar panel engaging element is pushed towards the mounting rail until the solar panel is clamped to the mounting rail.

In an embodiment, an intermediate portion of the handle comprises a contact surface and the contact surface is supported at the fulcrum. The provision of a contact surface enables a translation of the fulcrum whilst the handle and central portion remain in contact. This enables translation of the handle from a free to a locked position. Typically, the contact surface is curved, yet it may be understood that a curved surface with indents would also work.

In an embodiment, the distance between the free end and the fulcrum or contact surface is at least five times the distance between the second end and the fulcrum or contact surface, preferably at least ten times. Advantageously, only a moderate force needs to be applied to activate the handle and to fasten the panel clamp.

In an embodiment, the handle is shaped as a crowbar. In this context, the term "crowbar" is used to indicate an elongate body having a proximal end and a bent distal end. The bent distal end may be configured to fit between a portion of the rail engaging element and the panel engaging element. The distal end is configured to be engaged to the rail engaging element while the bent portion contacts the panel engaging element or vice versa. During use, a small force is applied in an application portion near the proximal end of the handle. Consequent to the lever mechanism this results in a larger force acting near the distal end. Application of the force increases the distance between the rail engaging element and the panel engaging element. The relative movement of the elements with respect to each other cause the clamping of the solar panel to the mounting rail.

To avoid release of the clamp after activation of the lever mechanism, a locking feature is preferably provided. Such a locking feature may be part of the panel clamp or may be provided separately.

In an embodiment, the panel clamp automatically locks upon activation of the lever mechanism. Advantageously, no separate locking is required, allowing the panel clamp to be fastened with a single hand and without the possibility of accidental disengagement during fastening. Alternatively, the lever mechanism may only be used to clamp the solar panel, while a separate locking feature can be provided to prevent a release of the clamp. Such a locking feature may be provided as a separate element or integrally formed with the panel engaging element or the rail engaging element. Examples of a locking feature that automatically lock the panel clamp include but are not limited to many different types of snap-fit connection.

In an embodiment, the lever mechanism is configured to pivot the handle until the curved surface of the handle supported by the panel engaging element is provided on one side of both handle ends. Advantageously, all elements are locked together.

In an embodiment, the rail engaging element comprises a receptacle for receiving the second end of the handle. The second end of the handle has a complementary shape configured to pivotably engage with the receptacle. In an embodiment, the second end of the handle is provided with a cylindrical portion, yet it will be understood that alternative shapes may also be possible that allow for a pivotable engagement.

In an embodiment, the handle and the rail engaging element are separate elements. Advantageously, both elements can be manufactured according to a relatively simple design, making the manufacture relatively cheap. Alternatively, a physical linkage, preferably a hinge at the pivoting point, may be provided between the elements.

In an embodiment, the clamp is releasable. Advantageously, the panel clamp can be removed without damaging the solar panels, fastening assembly, or the clamp itself.

In an embodiment, the body comprises a central portion and two upper sidewalls together forming a U-shape. Advantageously, a U-shape provides space between the top surface of the mounting rail and a vertical level of the solar panel frame edge for providing the rail engaging element, handle and/or the locking feature. This allows the entire panel clamp to be provided at a vertical level below the solar panel frame edge, reducing or avoiding entirely the shadow created by the panel clamp. Furter advantageous is that the U-shape is easy to manufacture using extrusion and provides sufficient strength to the panel engaging element. Alternatively, the body of the solar panel engaging element may be an essentially flat plate.

According to an important aspect of the invention, the solar panel engaging element comprises a lower portion configured to extend from a lower surface of the body towards the top surface of the mounting rail. The lower portion is configured to engage to the top surface of the mounting rail upon activation of the fastening tool.

In an embodiment, the flange is connected to the body at a first side of the central portion and wherein the lower portion is connected to the body at a second side of the central portion opposite to the first side. Advantageously, the clamp may be used as an end clamp. The lever mechanism typically exerts a downward directed force onto the body of the panel engaging element. Because a lower portion is provided on a side opposite to the flange, a sufficiently strong clamp can be achieved. In an embodiment, the lower portion is a lower sidewall. The lower sidewall may be essentially flat and configured to extend in a straight line from the body to the mounting rail.

In an embodiment, the flange is a first flange and wherein the solar panel engaging element further comprises a second flange, the second flange extending from the body in a direction opposite to the first flange. Advantageously, the panel clamp can be used to simultaneously clamp two solar panels. In an embodiment, no lower portion may be provided and the lever mechanism is used to simultaneously clamp two adjacent solar panels to the mounting rail. Preferably, however, the panel clamp is both provided with a second flange and a lower portion, allowing the use of the panel clamp both as an end clamp and an intermediate clamp.

In an embodiment, the panel clamp may both be used as an end clamp and an intermediate clamp. To ensure a reliable clamp for two solar panel, the panel clamp may be provided with a second clamping mechanism to clamp a second solar panel below the second clamp.

In an embodiment, a lower surface of the first flange and/or the second flange comprises protruding features configured to clamp a second solar panel. The protruding edge grips the frame of a solar panel, preventing its disengagement based on friction.

In an embodiment, the lower portion comprises an abutment feature configured to abut a side of a frame of the solar panel. The abutment feature ensures the correct alignment of the panel clamp with respect to the second solar panel.

In an embodiment, the central portion comprises a slot and wherein the rail engaging element is configured to partially extend through the slot. This allows the fastening tool to be arranged on a top side of the panel engaging element, where it is easily accessible for fastening.

In an embodiment, the rail engaging element comprises a protruding portion that is configured to interlock with the slot of the rail engaging element. The protruding portion is shaped complementary to the slot and configured to be received within the slot after activation of the handle. Consequently, movement in at least the plane of the central portion is prevented.

In an embodiment, the fastening features on the rail engaging element are configured to engage with the mounting rail using a snap-fit connection. In this context the term snap-fit connection is used to refer to any type of quick engagement using a snap of click movement. A snap-fit connection allows for a quick assembly by snapping or clicking the rail engaging element to the mounting rail. The mounting rail may be provided with complementary fastening features to facilitate the snap-fit connection.

In an embodiment, the fastening features are a pair of hooks configured to hook into a groove provided in the mounting rail. Advantageously, after fastening the rail engaging element, the rail engaging element or pre-assembled panel clamp can still be moved along the longitudinal direction of the mounting rail. This eases the installation, as the panel clamp may be moved into the correct position before activating the handle.

In an embodiment, the panel clamp is made of aluminium. Aluminium is sufficiently strong and light-weight.

In an embodiment, one or more elements are manufactured using an extrusion process. Preferably, all elements are manufactured using an extrusion process. Typically, long profiles are extruded and cut to size. Consequently, manufacture is relatively cheap and logistically easy as all elements may be produced by the same manufacturer.

Although all elements are typically manufactured separately, the panel clamp is preferably sold as a pre-assembled panel clamp. This accelerates the installation.

In an embodiment, the panel clamp further comprises a pre-assembly aid configured to hold the solar panel engaging element, rail engaging element and fastening tool together when the panel clamp has not yet been fastened. Advantageously, the pre-assembled panel clamp is not likely to disengage accidentally, thereby facilitating a fast installation.

In an embodiment, the pre-assembly aid is made of stainless steel.

According to a second aspect of the invention, and in accordance with the advantages described above, there is provided a fastening assembly comprising a plurality of mounting rails and panel clamps. In an embodiment, the panel clamps are used both as end clamps and as intermediate clamps.

According to another aspect of the invention, and in accordance with the advantages described herein above, there is provided a solar panel installation comprising a plurality of solar panels fastened using a plurality of panel clamps according to the invention. In an embodiment, the panel clamps are used both as end clamp and as intermediate clamp.

According to yet another aspect of the invention, and in accordance with the advantages described herein above, there is provided a method for fastening a solar panel to a mounting rail using the panel clamp according to the invention. The method comprises the following steps: arranging a first solar panel on the mounting rail; arranging the first flange of the panel clamp over an edge of the first solar panel; connecting the rail engaging element with the mounting rail; and activating the lever mechanism to fasten the solar panel to the mounting rail. It will be understood that these steps do not necessarily be carried out in this order. For example, the rail engaging element may be engaged to the mounting rail also before arranging the solar panel on the mounting rail and/or arranging the first flange of the panel clamp over an edge of the first solar panel.

In an embodiment, a pre-assembled panel clamp is provided. Advantageously, this accelerates the installation.

In an embodiment, the method further comprises the following steps: arranging a second solar panel on the mounting rail and sliding the panel towards the panel clamp; clamping the second solar panel between a second flange of the panel clamp and the mounting rail. Typically, the second flange is provided with an abutment feature and the solar panel is forced into the clamping position. Advantageously, two solar panels can be fastened using a single clamp. Preferably, the method is repeated several times until all solar panels in a row have been fastened using a plurality of the panel clamps.

### Brief description of drawings

The present invention will be discussed in more detail below, with reference to the attached drawings, in which:
Figure 1A schematically shows a top view of a solar panel installation comprising a number of solar panels connected using a plurality of panel clamps according to the present invention;
Figure 1B shows a detail of the solar panel installation in a front view at the position indicated by IB in Figure 1A;
Figure 1C shows a detail of the solar panel installation in a side view at the position indicated by IC in Figure 1A;
Figure 2A shows an exploded perspective view of a first embodiment of the panel clamp.
Figure 2B schematically shows an exploded front view of the panel clamp according to the first embodiment.
Figure 2C schematically shows an exploded side view of the panel clamp according to the first embodiment.
Figures 3A-3C schematically illustrate a method of arranging a pre-assembled panel clamp onto a mounting rail.
Figures 4A-4D schematically illustrate a method of fastening a solar panel to a mounting rail using a panel clamp according to the first embodiment.
Figures 5A-5B schematically illustrate a method of fastening a second solar panel to a mounting rail using a panel clamp according to the first embodiment.
Fig. 6A shows a perspective view of a second embodiment of the panel clamp.
Fig. 6B shows a perspective view of a pre-assembly aid used in the second embodiment of the panel clamp.
Fig. 6C shows a side view of the second embodiment of the panel clamp.

The figures are meant for illustrative purposes only, and do not serve as restriction of the scope or the protection as laid down by the claims.

### Description of embodiments

The invention will be explained in more detail below with reference to drawings in which illustrative embodiments thereof are shown. The drawings are intended exclusively for illustrative purposes and not as a restriction of the inventive concept which is to cover all modifications, equivalents, and alternatives falling within the scope of the present invention. The scope of the invention is only limited by the definitions presented in the appended claims.

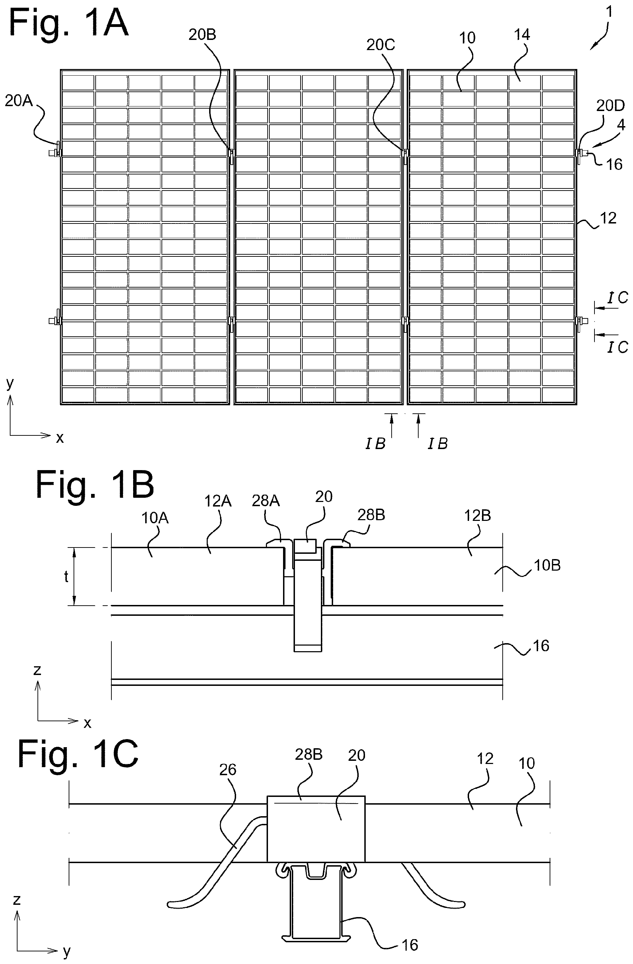

Fig. 1A schematically shows a top view of an exemplary embodiment of a solar panel installation 1. The solar panel installation 1 includes a fastening assembly 4 and a plurality of solar panels 10 installed on a surface using the fastening assembly 4. The fastening assembly 4 comprises a plurality of mounting rails 16 and a plurality of panel clamps 20A, 20B, 20C, 20D. In addition, the fastening assembly 4 may comprise other elements configured to fasten the mounting rails 16 to a surface or roof.

The solar panels 10 each have a circumferential frame 12 and a top surface 14. The solar panels 10 are arranged on the mounting rail 16 and are fastened to the mounting rails 16 by the plurality of panel clamps 20. The mounting rail 16 is shaped as an elongate profile, which extends in a longitudinal direction X. A direction perpendicular to the longitudinal direction X is a transverse direction Y. The circumferential frame 12 surrounds the top surface 14 and thereby protects the light receiving surface from damages during transport and after installation. Moreover, the circumferential frame 12 provides a mounting structure for connecting the solar panel 10 to the fastening assembly 4. The plurality of panel clamps 20 are fixed to the mounting rail 16 and clamp around the circumferential frame 12, thereby fastening solar panels 10 to the mounting rails 16 of the fastening assembly 4. Typically each solar panel 10 is supported by at least two mounting rails 16 and provided with two panel clamps 20 along at least two opposite sides of the frame 12.

The solar panels 10 may be installed on an inclined roof or on a flat surface. The mounting rails 16 are brought into an inclined position such that the solar panels 10, which are supported by the mounting rails 16, can also be arranged in an inclined position. The panel clamps 20 thus need to tightly clamp the circumferential frame 12 to avoid that the solar panel could start sliding under the influence of gravity.

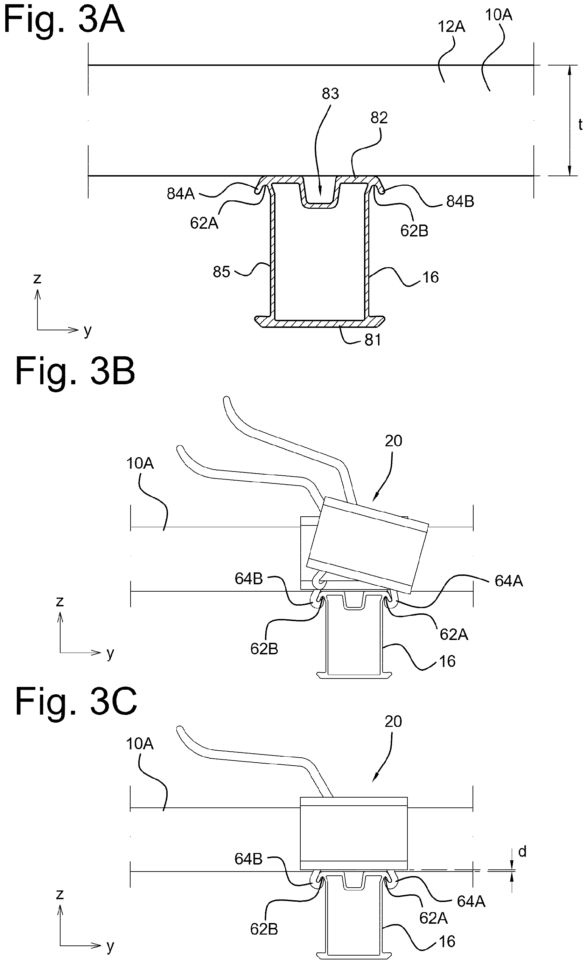

Fig. 1B shows a partial front view of the solar panel installation 1 in Fig. 1A. The panel clamp 20 is arranged in between two adjacent solar panels 10A, 10B (schematically indicated). The panel clamp 20 has a first flange 28A and a second flange 28B that extend above the frame member 12A, 12B of the solar panels 10A, 10B. The remaining elements of the panel clamp 20 are provided in between the solar panels 10A, 10B or below the solar panels 10A, 10B. This is advantageous, as the amount of shadow of the panel clamp 20 onto the top surface of the solar panels 10A, 10B is minimized. The panel clamp 20 is configured to clamp the frame 12A, 12B, of the solar panels 10A, 10B between the flanges 28A, 28B and the mounting rail 16, as will be described in more detail and with reference to Fig. 3A-3C below. The frame 12A, 12B has a thickness t.

Fig. 1C shows a partial side view of the solar panel installation 1 in Fig. 1A. The panel clamps 20 according to the present invention can be used as so-called end clamps, which are placed on the end of a row of solar panels. Characteristic for the use as an end clamp is that only one flange 28A is in contact with a solar panel 10, whereas the second flange 28B extends in the open air. Advantageously, the same panel clamps 20 can also be used as so-called intermediate panel clamps, whereby both flanges 28A, 28B are used to fasten neighbouring solar panels 10A, 10B in the solar panel installation 1. This is different from conventional systems wherein typically two different types of panel clamps are used for fastening two solar panels, or a single solar panel at the end of a row.

The solar panel 10 has been fastened using a handle 26. The handle 26 is configured to not extend above the top surface of the solar panels 10, to prevent it from creating shadow on the solar panels 10.

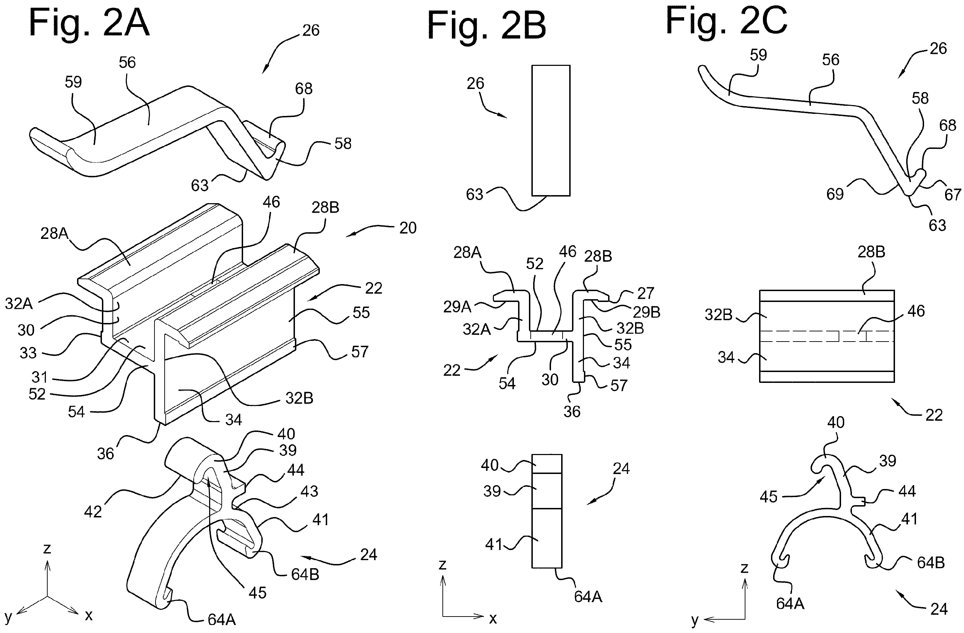

Fig. 2A shows an exploded perspective view of a first embodiment of the panel clamp 20. Fig. 2B and 2C respectively show a front view and side view of the panel clamp 20 in Fig. 2A. The panel clamp 20 comprises a solar panel engaging element 22, a rail engaging element 24, and a fastening tool, which is shaped as a handle 26.

The solar panel engaging element 22 comprises the two flanges 28A, 28B, a body 30, and a lower portion 34, shaped as a lower side wall. The body 30 comprises a central portion 31 with a top surface 52, bottom surface 54 and a slot 46 arranged therein, and two upper sidewalls 32A, 32B. The body 30 thereby is shaped as the capital letter "U". In use, the central portion 31 of the body 30 is arranged to be substantially parallel to the mounting rail 16 whereas the upper sidewalls 32A, 32B extend perpendicularly from the central portion 31 and in an upward direction away from the mounting rail 16. The first upper sidewall 32A comprises an abutment feature 33 configured to abut the frame 12 of a solar panel 10.

The lower sidewall 34 extends from the central portion 31 in a direction perpendicular to the central portion 31 and towards the mounting rail 16. The lower sidewall 34 has an outer surface 55 configured to face the solar panel 10 in use. An abutment rim 57 is provided on the outer surface 55, adjacent to an outer end 36 of the lower sidewall 34. In the depicted embodiment, the lower sidewall 34 is aligned with the second upper side wall 32B, yet in other embodiments, the lower sidewall 34 may also be provided in a different position. Moreover, it will be understood that the lower sidewall 34 may have also a different form and is not necessarily a substantially flat plate.

The two flanges 28A, 28B, extend from the body 31 in a direction substantially parallel to the mounting rail 16 and central portion 31. The first flange 28A has a substantially flat lower surface 29A (see Fig. 2B). The second flange 28B has a protruding portion 27 along its lower surface 29B.

The upper and lower sidewalls 32A, 32B, 34 are dimensioned to correspond to the thickness t of the solar panel frame 12, so that a solar panel 10 can be clamped in between the mounting rail 16 and one of the flanges 28A, 28B when the outer end 36 of the lower sidewall 34 is brought into direct contact with the mounting rail 16. The depicted embodiment is dimensioned to be suitable for a solar panel frame 12 having a thickness of 30 mm. Nevertheless, it will be understood that the design of the panel clamp 20 is easily adjusted by a skilled person to fit other sizes of solar panel frames 12 as well. Moreover, in other embodiments, the length of the upper and/or lower sidewalls 32A, 32B, 34, may be made adjustable. This allows a single solar panel engaging element 22 to be used for fastening solar panels having a circumferential frame 12 of different thicknesses. Typically, a circumferential frame of a solar panel has a thickness of 25, 30, 35 or 40 mm. The design of the panel clamp 20 can be adjusted by the skilled person to fit any of these dimensions.

The rail engaging element 24 comprises a body 41 with an arm 39 extending therefrom. The body 41 is arc-shaped and substantially symmetric along a vertical axis Z, perpendicular to both the longitudinal axis X and transverse axis Y. The body 41 has a first hook 64A and second hook 64B, which extend from opposite ends of the body 41. The hooks 64A, 64B are configured to engage with the mounting rail 16. The arm 39 is decentrally connected to the body 41 and comprises a proximal end 42, distal end 43, hook portion 40 with receptacle 45, and a protruding portion 44. The protruding portion 44 is configured to be received within and interlock itself with the slot 46.

The handle 26 has an elongate body 56 shaped as a crowbar and having an engagement portion 58, application portion 59, and a curved contact surface 63. The engagement portion 58 is shaped complementary to the hook portion 40 and configured to be received in the receptacle 45 of the rail engaging element 24. The engagement portion 58 comprises a cylindrical portion 68, a substantially flat first abutment surface 67, and a substantially flat second abutment surface 69. The first abutment surface 67 and second abutment surface 69 make an angle of approximately 60 degrees with each other.

Fig. 3A-3C schematically illustrate a method of arranging a pre-assembled panel clamp 20 onto a mounting rail 16.

Fig. 3A shows a mounting rail 16 with a first solar panel 10A arranged on top of it in the desired position for fastening it. The mounting rail 16 is an elongate extruded profile having a bottom surface 81, a top surface 82, and two side walls 85 extending between the bottom surface 81 and the top surface 82. An elongate channel 83 is provided in the top surface 82 and configured for the fastening of other components of the solar panel installation 1, such as a micro convertor, or device for guiding the cables of the solar panels 10. The top surface 82 comprises two rail flanges 84A, 84B that extend outwards from each side wall 85. The rail flanges 84A, 84B comprise a bent portion to form a groove 62A, 62B between a lower surface of the respective flange 84A, 84B and the sidewall 85. The grooves 62A, 62B are configured to receive the hooks 64A, 64B of the rail engaging element 24. It will be understood that in different embodiments, alternative complementary fastening features may be provided on the rail engaging element and the mounting rail to ensure a connection. For example, in an alternative embodiment, a rail engaging element may be fastened to the profile by inserting it into the channel 83 and rotating it in order to fasten it, wherein the rail engaging element comprises fastening features configured to interlock in the channel 83.

Fig. 3B shows a step of engaging a pre-assembled panel clamp 20 with the mounting rail 16. In this context, the pre-assembled panel clamp refers to the arm 39 of the rail engaging element 22 extending through the slot 46 of the panel engaging element 22. The panel clamp 20 is connected to the mounting rail 16 using the pair of hooks 64A, 64B of the rail engaging element 24. A first hook 64A is inserted into the first groove 62A of the mounting rail 16 forming a first engagement point between the panel clamp 20 and the mounting rail 16. The panel clamp 20 is then pushed towards the mounting rail 16 to form a second engagement between the second groove 62B and the second hook 64B through a snap-fit connection. In establishing the snap-fit connection, the rail engaging element 24 locally deforms and interlocks with the mounting rail 16. The hooks 64A, 64B grip around the flanges 84A, 84B and thereby vertical movement of the rail engaging element 24 with respect to the mounting rail 16 is blocked. However, the hooks 64A, 64B can freely slide through the respective grooves 62A, 62B, thereby allowing the pre-assembled panel clamp 20 to be moved along the mounting rail 16. This eases the installation.

Fig. 3C shows the pre-assembled panel clamp 20 after engagement with the mounting rail 16. The pre-assembled panel clamp 20 is slid towards the solar panel 10A to arrange the first flange 28A to extend over a top surface of the first frame 12A. The abutment feature 33 on the first upper sidewall 32A is placed in direct contact with a side surface of the frame 12A. At this stage, the lower sidewall 34 is spaced above but at a small distance d from the mounting rail 16. Similarly, the first flange 28A is spaced above but at a small distance from the first frame 12A, i.e. the first solar panel 10A is not yet clamped to the mounting rail 16. The distance d between a lower side of the lower sidewall 34 and the mounting rail 16 is typically a few millimetres only, e.g., 0.5 mm or 1 mm.

It will be understood that directly arranging a pre-assembled panel clamp 20 onto the mounting rail 16 is more efficient and quicker than first engaging the rail engagement element 24 with the mounting rail 16 and afterwards assembling the handle 26 and solar panel engaging element 22. Nevertheless, the latter is also possible.

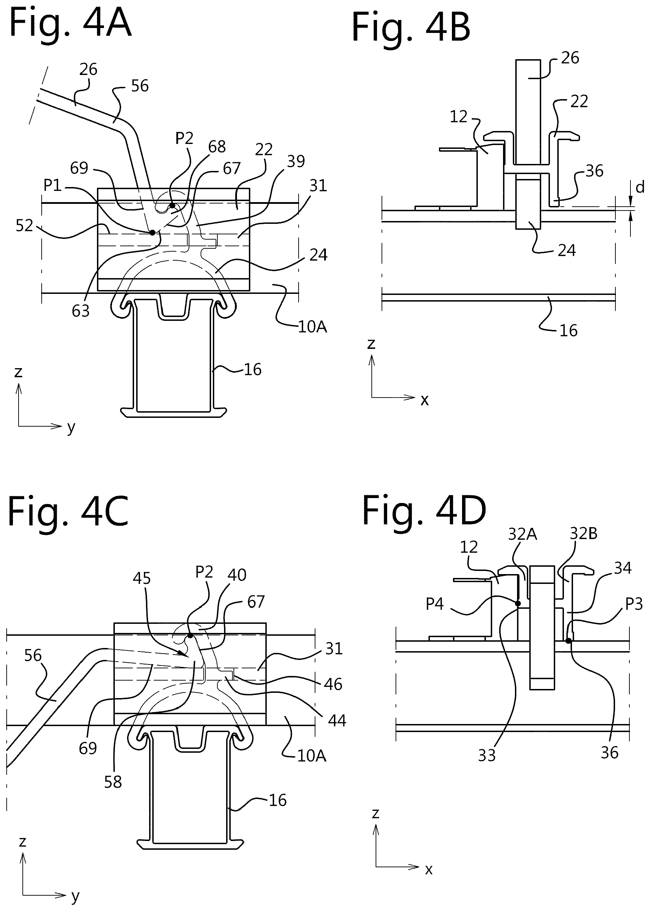

Fig. 4A-4D schematically illustrate a method of fastening the solar panel 10A to the mounting rail 16 using the panel clamp 20. Fig. 4A and 4B respectively show a side and front view of the solar installation 1 after engaging the pre-assembled panel clamp 20 with the mounting rail 16. Fig. 4C and 4D respectively show a side and front view of the solar installation 1 after placing the panel clamp 20 under tension using the handle 26.

Fig. 4A shows the panel clamp 20 in the unclamped position. The solar panel 10A is clamped to the mounting rail 16 by applying a downward force to the application portion 59 (not shown) of the handle 26, pressing it towards the mounting rail 16. This force is transferred through the elongate body of the handle 26, and due to the fulcrum P1 results into an upward directed force that acts on the hook portion 40 of the rail engaging element 24. Since the rail engaging element 24 is engaged to the mounting rail 16, any vertical movement of the hook portion 40 is blocked. Consequently, the cylindrical portion 68 of the handle 26 starts acting as a hinge such that the elongate body 56 starts rotating around the pivot point P2. The curved contact surface 63 moves from the fulcrum P1 towards the arm 39 of the rail engaging element 24, thereby simultaneously pressing the solar panel engaging element 22 downwards and towards the mounting rail 16 until the first abutment surface 67 abuts a surface of the arm 39 of the rail engaging element 24, and the second abutment surface 69 abuts the top surface 52 of the central portion 31.

Fig. 4C shows the panel clamp 20 in the clamped position. The engagement portion 58 of the handle has been received in the receptacle 45. The hook portion 40 of the rail engaging element 24 prevents the upward movement and movement in the X-Y plane of the handle 26, whereas the panel engaging element 22 prevents the further downward movement of the handle 26.

During the clamping step, the central portion 31 is pushed downwards towards the mounting rail 16 until the lower side wall 34 reaches the top surface of the mounting rail 16 and/or until the first flange 28A reaches the top surface of the frame 12A. At that moment, the downward pressing force may lead to a small rotation of the solar panel engaging element 22 around a third pivot point P3 positioned at the outer end 36 of the lower side wall 34, or around a fourth pivot point P4 positioned at the abutment feature 33 of the first upper side wall 32A. Due to this rotation, a stable position is found wherein the frame 12 is clamped between the flange 28A and the mounting rail 16. It will be understood by the skilled person that to enable the rotation, it is important that the lower side wall 34 is arranged at an opposite side of the central portion than the first flange 28A.

Simultaneously, the central portion 31 with slot 46 moves downwards until the locking feature 44 is positioned within the slot 46. The locking feature 44 prevents the movement of the solar panel engaging element 22 with respect to the rail engaging element 24 in the horizontal plane. As a result, the panel clamp 20 is fixed to the mounting rail 16 and the solar panel 10A is fastened. In the clamped position, the lower surface 29A clamps the frame 12 of the solar panel 10, while the outer end 36 clamps the mounting rail 16. This provides a stable clamping position and hence the panel clamp 20 is suitable for use as an end clamp as described in relation to Fig. 1A-1C above.

The panel clamp 20 can be easily released by pulling the application portion 59 (not shown) upwards again. However, given the positioning of this portion between the solar panels 10A, 10B, there is no risk that this occurs accidentally during use. The handle 26 does not extend above the frame 12A. This is beneficial as no shadow is generated, which could negatively impact the solar power generation.

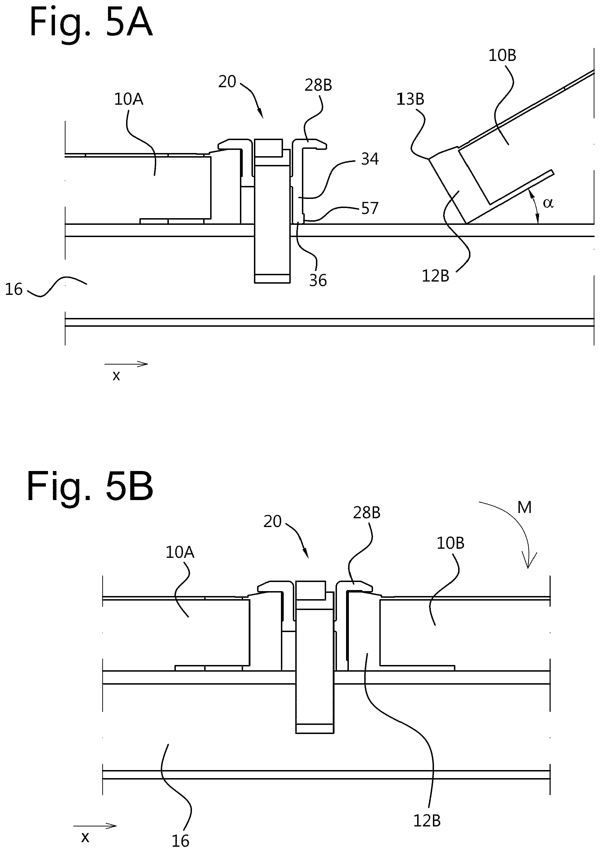

Fig. 5A and 5B show a method of fastening a second solar panel 10B. The second solar panel 10B is brought into vicinity of the panel clamp 20 and oriented under an angle α with respect to the mounting rail 16, as shown in Figure 5A. The second frame 12B is arranged under the second flange 28B such that an upper frame edge 13B is as close as possible to an upper corner between the second upper side wall 32B and the second flange 28B. The second solar panel 10B is then laid down horizontally onto the mounting rail 16, as indicated by an arrow M in Fig. 5B, and until the second solar panel 10B abuts the abutment rim 57. In the process, the second flange 28B clamps the second frame 12B. Afterwards, the steps in Fig. 3B-3C, and 4A-4C can be repeated using a second panel clamp to fasten the second panel 10B on the other side.

The panel clamp 20 is configured to independently clamp a solar panel 20 on the first side where the first flange 28A is located. The second flange 28B can only clamp a second solar panel 10B if the first solar panel 10A is already clamped. It will therefore be understood that when the panel clamp 20 is used as an end clamp, the panel clamp 20 needs to be arranged accordingly to receive the solar panel 10 at the correct position. As Fig. 1A illustrates, the panel clamps 20A and 20D at opposite ends of a row of solar panels 10 are rotated 180 degrees with respect to each other.

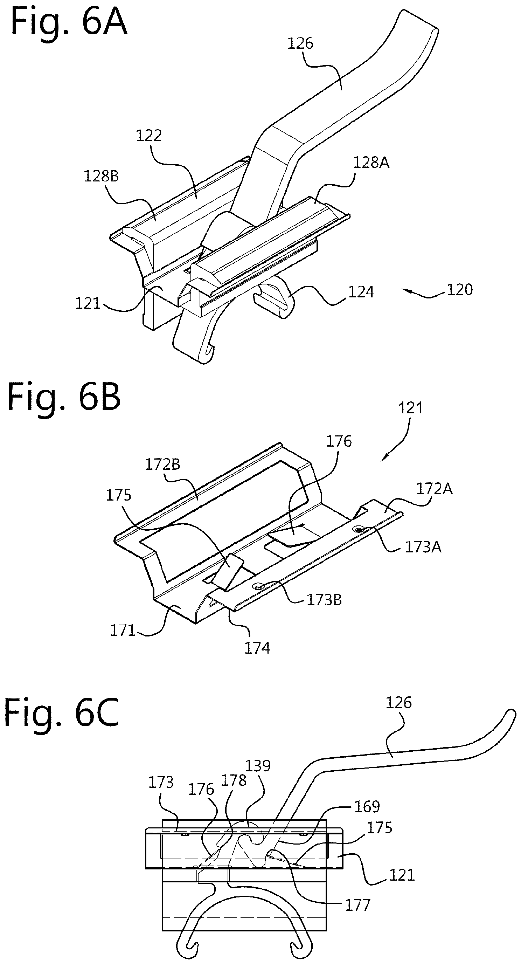

Fig. 6A shows a perspective view of a pre-assembled panel clamp 120 according to a second embodiment. Elements of the panel clamp that are the same are indicated by the same number preceded by 100 and are not discussed again. The panel clamp 120 comprises a solar panel engaging element 122, a rail engaging element 124, a handle 126, and, in addition, a pre-assembly aid 121. The pre-assembly aid 121 is provided to make pre-assembly of the panel clamp 120 easier and, more importantly, to ensure that the panel clamp 120 remains in a pre-assembled state after the pre-assembly.

Fig. 6B shows a perspective view of the pre-assembly aid 121. The pre-assembly aid 121 is made of stainless steel and comprises a central portion 171, two lateral wings 172 extending from opposite sides of the central portion 171, a plurality of protrusions 173A, 173B extending from a lower surface 174 of the wings 172, a first protruding lip 175, and a second protruding lip 176. The protrusions 173A, 173B provide additional friction in the clamping connection between the panel clamp 120 and the frame 12, thereby further increasing the reliability of the connection. It will be understood by the skilled person, that alternatively similar protrusions could be provided on the lower surface of the flanges 28A, 28B in the first embodiment wherein no pre-assembly aid 121 is provided.

Fig. 6C shows a side view of the pre-assembled panel clamp 120. A first indent 177 is provided in the second abutment surface 169 of the handle 126, and a second indent 178 is provided in a surface of the arm 139. The first protruding lip 175 and second protruding lip 176 are configured to be received in these indents 177, 178 to maintain the panel clamp 120 in a pre-assembled position.

The present invention may be embodied in other specific forms without departing from its essential characteristics. The described embodiments are to be considered in all respects only as illustrative and not restrictive to the inventive concept. The scope of the invention is, therefore, indicated by the appended claims rather than by the foregoing description. It will be apparent to the person skilled in the art that alternative and equivalent embodiments of the invention can be conceived and reduced to practice. In addition, many modifications may be made to adapt a particular configuration or material to the teachings of the invention without departing from the essential scope thereof.

For example, in an alternative embodiment a panel clamp may be provided that can only be used as a two-sided clamp, i.e., a clamp that can only function when solar panels 10A,10B are provided, and wherein the flanges 28A, 28B are configured to engage with the respective frames when the handle is activated. In such, an embodiment, the lower side wall 34 may be omitted, and the panel clamp would be arranged after placing both solar panels on the mounting rail 16. By activating the handle, the panel clamp would simultaneously press both solar panels against the mounting rail 16.

All modifications which come within the meaning and range of equivalency of the claims are to be embraced within their scope.

## Claims

1. A panel clamp for fastening a solar panel to a mounting rail, wherein the panel clamp comprises a solar panel engaging element, a rail engaging element, and a fastening tool,
wherein the solar panel engaging element comprises a body with a central portion configured to extend substantially parallel to the mounting rail, and a flange extending from the body in a direction substantially parallel to the mounting rail, the flange being configured to be spaced from the mounting rail and to clamp a solar panel thereto;
wherein the rail engaging element comprises a body with a connector portion, and one or more fastening features to fasten the rail engaging element to the mounting rail;
wherein the fastening tool is operably engaged to the central portion of the solar panel engaging element and to the connector portion of the rail engaging element, the fastening tool configured to generate a relative movement between the solar panel engaging element and the rail engaging element, thereby fastening the solar panel engaging element to the rail engaging element and clamping the solar panel to the mounting rail; and
wherein the fastening tool uses a lever mechanism to generate the relative movement.

2. The panel clamp according to claim 1 wherein the lever mechanism comprises a handle having a free end and a second end opposite to the free end pivotably engaged to the connector portion of the rail engaging element, wherein the handle is supported by the central portion of the panel engaging element at a single fulcrum.

3. The panel clamp according to claim 2, wherein an intermediate portion of the handle comprises a contact surface and wherein the contact surface is supported at the fulcrum, preferably wherein the lever mechanism is configured to pivot the handle until the contact surface of the handle is arranged on one side of both handle ends.

4. The panel clamp according to claim 2 or 3, wherein the distance between the free end and the fulcrum is at least five times the distance between the second end and the fulcrum, preferably at least ten times.

5. The panel clamp according to any of the preceding claims as long as dependent on claim 2, wherein the rail engaging element comprises a receptacle for receiving the second end of the handle and/or wherein the handle and the rail engaging element are separate elements.

6. The panel clamp according to any of the preceding claims, wherein the body comprises a central portion and two upper sidewalls together forming a U-shape.

7. The panel clamp according to any one of the preceding claims, wherein the solar panel engaging element comprises a lower portion configured to extend from a lower surface of the body towards the top surface of the mounting rail, preferably wherein the flange is connected to the body at a first side of the central portion and wherein the lower portion is connected to the body at a second side of the central portion opposite to the first side.

8. The panel clamp according to any preceding claim, wherein the flange is a first flange and wherein the solar panel engaging element further comprises a second flange, the second flange extending from the body in a direction opposite to the first flange, preferably wherein a lower surface of the first flange and/or the second flange comprises protruding features configured to clamp a solar panel.

9. The panel clamp according to any one of the preceding claims, wherein the fastening features on the rail engaging element are configured to engage with the mounting rail using a snap-fit connection, preferably wherein the fastening features are a pair of hooks configured to hook into a groove provided in the mounting rail.

10. The panel clamp according to any of the preceding claims are manufactured through an extrusion process, preferably wherein the panel clamp is made of aluminium.

11. The panel clamp according to any of the preceding claims, further comprising a pre-assembly aid configured to hold the solar panel engaging element, rail engaging element and fastening tool together when the panel clamp has not yet been fastened, preferably wherein the pre-assembly aid is made of stainless steel.

12. The panel clamp according to any of the preceding claims, wherein the panel clamp is suitable for use both as an end clamp and as an intermediate clamp.

13. A solar panel installation comprising a plurality of solar panels fastened using a plurality of panel clamps according to any of claims 1-12.

14. A method for fastening a solar panel to a mounting rail using the panel clamp according to any one of claims 1-12, wherein the method comprises the following steps:
- arranging a first solar panel on the mounting rail;
- arranging the first flange of the panel clamp over an edge of the first solar panel;
- connecting the rail engaging element with the mounting rail;
- activating the lever mechanism to fasten the solar panel to the mounting rail.

15. The method according to claim 14 wherein a pre-assembled panel clamp is provided.
